# EUROPÄISCHE PATENTSCHRIFT

(11) **EP 2 504 906 B1**
(45) Veröffentlichungstag und Bekanntmachung des Hinweises auf die Patenterteilung: **13.04.2016**
(21) Anmeldenummer: 10784777.4
(22) Anmeldetag: 25.11.2010
(51) Int. Cl.: H02K 5/10, H02K 5/167, H02K 15/14

(54) **VERFAHREN ZUR ANBRINGUNG EINES VERSCHLUSSSTOPFENS IN EINER MONTAGEBOHRUNG EINES MOTORENGEHÄUSES**
METHOD FOR ATTACHING A SEALING PLUG INTO A MOUNTING HOLE OF A MOTOR HOUSING
PROCÉDÉ POUR PLACER UN BOUCHON DE FERMETURE DANS UN ALÉSAGE DE MONTAGE D'UN CARTER DE MOTEUR

(30) Priorität: 26.11.2009 DE 102009056007
(43) Veröffentlichungstag der Anmeldung: 03.10.2012
(73) Patentinhaber: Hella KGaA Hueck & Co, 59552 Lippstadt (DE)
(72) Erfinder: RÜTHER, Alexander, 59939 Olsberg (DE); HÜSER, Theodor, 59590 Geseke (DE)
(86) Internationale Anmeldenummer: PCT/EP2010/068170
(87) Internationale Veröffentlichungsnummer: WO 2011/064279

(56) Entgegenhaltungen:
- EP-A2- 1 296 038
- DE-A1- 1 942 761
- DE-U1- 9 320 338
- NL-A- 7 309 458

## Beschreibung

Die vorliegende Erfindung bezieht sich auf ein Verfahren zur Anbringung eines Verschlussstopfens in einer Montagebohrung eines Motorengehäuses nach dem Oberbegriff des Anspruchs 1.

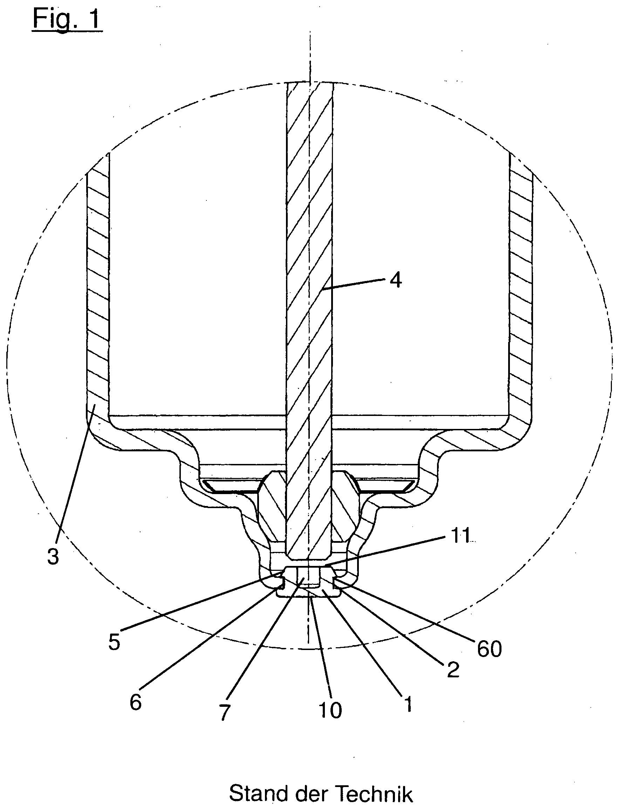

In Fig. 1 ist eine aus dem Stand der Technik bekannte Anordnung eines Verschlussstopfens 1 in einer Montagebohrung 2 eines Motorengehäuses 3 eines Motors mit einer Motorwelle 4 dargestellt. Der Motor kann insbesondere ein Elektromotor sein, welcher zum Beispiel bei einer Pumpvorrichtung (zum Beispiel bei einer Flügelzellenpumpe mit einem Rotor, der mit der Motorwelle 4 gekoppelt ist) eingesetzt werden kann.

Der Verschlussstopfen 1, welcher benötigt wird, um die Motorwelle 4 während des Montageprozesses abzustützen, besteht aus einem gummielastischen Material und wird bei der Montage in die Montagebohrung 2 des Motorengehäuses 3 eingepresst. Der Verschlussstopfen 1 ist einstückig ausgebildet und abschnittsweise konisch ausgeführt, so dass er in Umfangsrichtung einen angeschrägten Flächenabschnitt 5 aufweist, der sich nach der Montage in das Innere des Motorengehäuses 3 erstreckt. Ferner weist der Verschlussstopfen 1 eine sich in Umfangsrichtung erstreckende, nutartige (insbesondere ringförmige) Vertiefung 6 auf, die sich unmittelbar an den angeschrägten Flächenabschnitt 5 anschließt und in die der Rand der Montagebohrung 2 während des Einpressvorgangs eingreift, so dass der Verschlussstopfen 1 in der Montagebohrung 2 gehalten werden kann. Derjenige Rand der nutartigen Vertiefung 6, der unmittelbar an den angeschrägten Flächenabschnitt 5 des Verschlussstopfens 1 angrenzt, bildet einen Abdichtungsabschnitt 60, welcher sich in Umfangsrichtung des Verschlussstopfens 1 erstreckt und innen auf dem Rand der Montagebohrung 2 aufliegt und so die Montagebohrung 2 im Inneren des Motorengehäuses 3 abdichten kann. Eine Außenfläche 10 des Verschlussstopfens 1, die nach der Montage außen am Rand der Montagebohrung 2 des Motorengehäuse 3 anliegt, ist eben ausgeführt, wohingegen die Innenfläche 11, die sich nach der Montage in das Innere des Motorengehäuses 3 erstreckt, eine vorzugsweise im Wesentlichen zylindrisch geformte Ausnehmung 7 aufweist.

Bei der Montage wird der Verschlussstopfen 1 zum Verschließen der Montageöffnung 2 während des Einpressvorgangs in axialer Richtung gestaucht und dadurch entgegen der Radialverformung, welche im weiteren Montageverlauf zur Sicherstellung eines festen Halts des Verschlussstopfens 1 in der Montageöffnung 2 erforderlich ist, in radialer Richtung gedehnt. Ein Problem besteht darin, dass auf Grund der Nähe zu der Motorwelle 4 für den Einpressvorgang nur ein relativ schmaler und flacher angeschrägter Flächenabschnitt 5 zur Verfügung steht. Während des Einpressvorgangs wird der Verschlussstopfen 1 auch in radialer Richtung sehr stark deformiert, was nicht nur die Montage erschwert und den Montageprozess behindert, sondern auch dazu führen kann, dass sich der in Umfangsrichtung des Verschlussstopfens 1 erstreckende Abdichtungsabschnitt 60 nicht immer genau in die in Fig. 1 dargestellte Endlage gebracht werden kann, in der eine wirksame Abdichtung des Motorengehäuses 3 und ein fester Halt des Verschlussstopfens 1 in der Montageöffnung 3 gegeben ist. Ein partielles Hängenbleiben des Verschlussstopfens 1 in der Montagebohrung 2 während des Einpressvorgangs kann folglich zu einer Fehlmontage und darüber hinaus auch zu unentdeckten Undichtigkeiten des Motorengehäuses 3 führen.

Anordnungen eines Verschlussstopfens in einer Montagebohrung eines Motorengehäuses, wobei der Verschlussstopfen in der Montagebohrung festgelegt ist und Mittel zur Abdichtung der Montagebohrung sowie eine zentrale Ausnehmung aufweist, sind zum Beispiel aus der DE 19 42 761 A1, aus der DE 93 20 338 U1 sowie aus der EP 1 296 038 A2 bekannt.

Diese Anordnungen zeichnen sich dadurch aus, dass die zentrale Ausnehmung in einer Außenfläche des Verschlussstopfens ausgebildet ist, welche sich nach der Montage abschnittsweise über den Rand der Montagebohrung hinweg erstreckt. Durch die besondere Ausgestaltung des Verschlussstopfens, bei der die zentrale Ausnehmung in einer Außenfläche des Verschlussstopfens ausgebildet ist, kann insbesondere die Montage des Verschlussstopfens in der Montageöffnung erheblich vereinfacht werden. Die Montage kann insbesondere mittels einer Montagehilfe erfolgen, die einen Montagedom aufweist, der in die Ausnehmung des Verschlussstopfens, die vorzugsweise im Wesentlichen zylindrisch geformt ist, eingreifen kann. Insbesondere kann ein partielles Hängenbleiben des Verschlussstopfens in der Montagebohrung während des Einpressvorgangs, welches zu einer Fehlmontage und darüber hinaus auch zu unentdeckten Undichtigkeiten des Motorengehäuses führen kann, wirksam vermieden werden.

Um den Verschlussstopfen sicher in der Montagebohrung festzulegen, besteht die Möglichkeit, dass der Verschlussstopfen eine nutartige (insbesondere ringförmige) Vertiefung aufweist, die mit einem Randabschnitt der Montagebohrung formschlüssig in Eingriff ist. Dadurch kann der Verschlussstopfen wirksam gegen eine axiale Verschiebung in der Montagebohrung gesichert werden.

Um die Montage des Verschlussstopfens zu vereinfachen, ist in der DE 19 42 761 A1 vorgesehen, dass der Verschlussstopfen abschnittsweise konisch ausgebildet ist und einen angeschrägten Flächenabschnitt aufweist. Der angeschrägte Flächenabschnitt erleichtert das Einpressen des Verschlussstopfens in die Montagebohrung.

Die Mittel zur Abdichtung der Montagebohrung können gemäß der DE 19 42 761 A1 einen Abdichtungsabschnitt umfassen, der an einer Außenseite des Verschlussstopfens ausgebildet ist und den Rand der Montagebohrung im Inneren des Motorengehäuses hintergreifen kann. Der Abdichtungsabschnitt ist dabei integral mit dem Verschlussstopfen ausgebildet, so dass in vorteilhafter Weise kein zusätzliches (insbesondere kein separates) Abdichtungsmittel erforderlich ist, um die Montagebohrung des Motorengehäuses wirksam abdichten zu können. Vorzugsweise kann sich der Abdichtungsabschnitt in Umfangsrichtung des Verschlussstopfens erstrecken, um so eine besonders wirksame Abdichtung der Montagebohrung zu bewirken.

Um die Herstellung des Verschlussstopfens zu vereinfachen, ist vorgesehen, dass der Abdichtungsabschnitt durch einen Teil der nutartigen Vertiefung gebildet ist. Vorzugsweise kann der Abdichtungsabschnitt unmittelbar an den angeschrägten Flächenabschnitt des Verschlussstopfens angrenzen.

Ein Verfahren der eingangs genannten Art ist aus der EP 1 296 038 A2 bekannt. Die NL 7 309 458 A offenbart Verschlussstopfen für Flaschen mit einem Abdichtungsabschnitt, der sich bei der Montage radial nach innen verformt.

Der vorliegenden Erfindung liegt die Aufgabe zu Grunde, ein Verfahren zur Anbringung eines Verschlussstopfens in einer Montagebohrung eines Motorengehäuses anzugeben, das eine einfache und sichere Montage des Verschlussstopfens ermöglicht.

Diese Aufgabe wird durch ein Verfahren der eingangs genannten Art mit den Merkmalen des kennzeichnenden Teils des Anspruchs 1 gelöst. Die Unteransprüche betreffen vorteilhafte Weiterbildungen der Erfindung.

Ein erfindungsgemäßes Verfahren zur Anbringung eines Verschlussstopfens in einer Montagebohrung eines Motorengehäuses umfasst folgende Schritte
- Bereitstellen eines Verschlussstopfens mit einer zentralen Ausnehmung an einer Außenfläche, die nach der Montage an einer Außenseite des Motorengehäuses anliegt, und einem sich Umfangsrichtung erstreckenden Abdichtungsabschnitt zur Abdichtung der Montagebohrung,
- Einführen eines Montagezapfens einer Montagehilfe in die zentrale Ausnehmung des Verschlussstopfens,
- Ansetzen des Verschlussstopfens an einem Rand der Montagebohrung,
- Verformen einer Innenfläche des Verschlussstopfens durch Einpressen in die Montagebohrung, so dass der Abdichtungsabschnitt nach dem Hindurchtritt durch die Montagebohrung in eine Position gelangt, in der er den Rand der Montagebohrung hintergreift.

Das erfindungsgemäße Verfahren zeichnet sich dadurch aus, dass der Montagezapfen gegenüber dem übrigen Teil der Montagehilfe vorgespannt wird und dass sich der Abdichtungsabschnitt während der Montage radial nach innen verformt. Das erfindungsgemäße Verfahren erlaubt eine einfache und sicher Montage in der Montageöffnung des Motorengehäuses. Insbesondere kann ein partielles Hängenbleiben des Verschlussstopfens in der Montagebohrung während des Einpressvorgangs, welches zu einer Fehlmontage und darüber hinaus auch zu unentdeckten Undichtigkeiten des Motorengehäuses führen kann, wirksam vermieden werden. Um bei der Montage eine hohe axiale Drucklast auf der Motorwelle zu vermeiden, ist erfindungsgemäß ferner vorgesehen, dass der Montagezapfen gegenüber dem übrigen Teil der Montagehilfe vorgespannt wird. Dadurch kann in vorteilhafter Weise eine Beschädigung/Verformung der Motorwelle bei der Montage verhindert werden.

In einer besonders vorteilhaften Ausführungsform wird vorgeschlagen, dass der Verschlussstopfen während des Einpressens in die Montageöffnung in axialer Richtung gedehnt wird und die axiale Dehnung durch den Druck der Montagehilfe bewirkt wird.

Es kann in einer besonders bevorzugten Ausführungsform vorgesehen sein, dass eine Basisfläche der Montagehilfe mit der Außenfläche des Verschlussstopfens in Kontakt gebracht wird, um die Dehnung des Verschlussstopfens zu begrenzen.

Anhand der beigefügten Zeichnungen wird die Erfindung nachfolgend näher erläutert. Dabei zeigt:
- Fig. 1: einen Schnitt durch eine aus dem Stand der Technik bekannte Anordnung eines Verschlussstopfens in einer Montagebohrung eines Motorengehäuses;
- Fig. 2: einen Schnitt durch eine Anordnung eines Verschlussstopfens in einer Montagebohrung eines Motorengehäuses, die mit einem Verfahren gemäß einem bevorzugten Ausführungsbeispiel der vorliegenden Erfindung hergestellt werden kann;
- Fig. 3: eine Schnittansicht, die die Montage des Verschlussstopfens in der Montagebohrung des Motorengehäuses veranschaulicht.

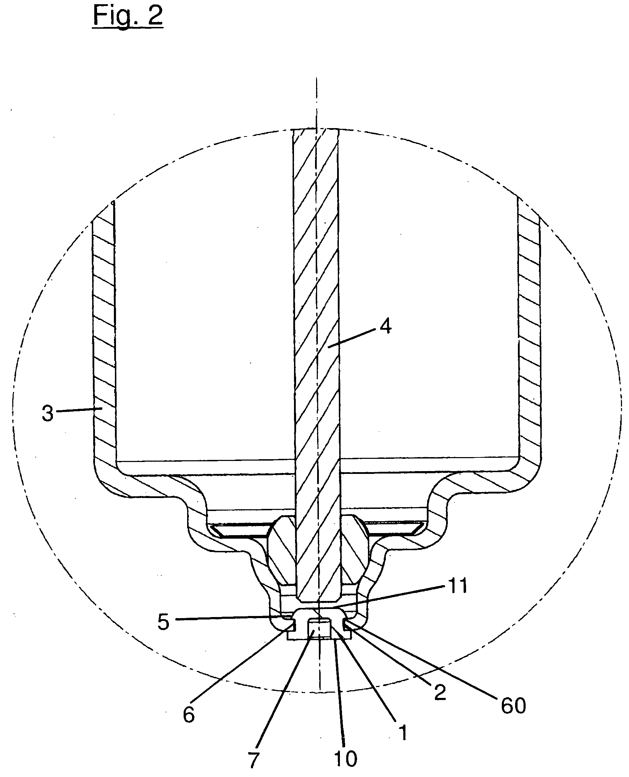

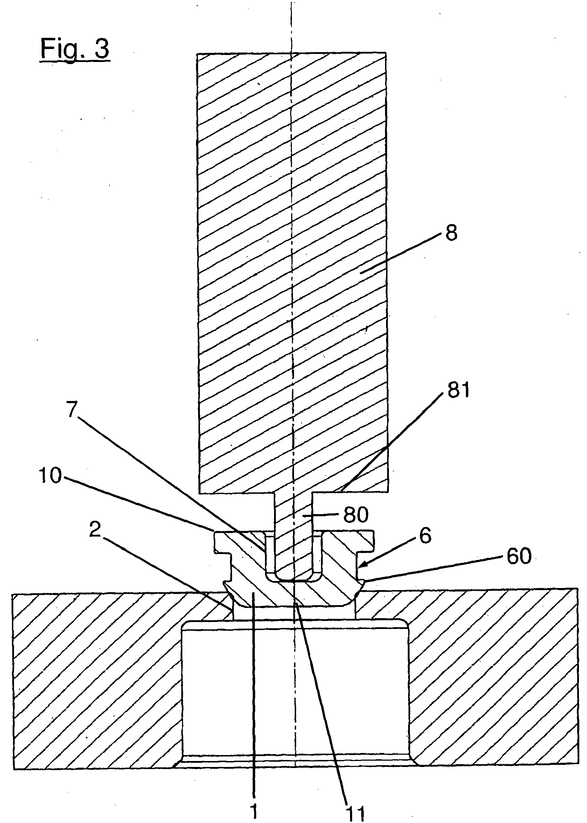

Unter Bezugnahme auf Fig. 2 und Fig. 3 soll nachfolgend eine Anordnung eines Verschlussstopfens 1 in einer Montagebohrung 2 eines Motorengehäuses 3 sowie ein Verfahren gemäß einem bevorzugten Ausführungsbeispiel der vorliegenden Erfindung zur Montage des Verschlussstopfens 1 in der Montagebohrung 2 des Motorengehäuses 3 näher erläutert werden.

In Fig. 2 ist die Anordnung des Verschlussstopfens 1 in der Montagebohrung 2 des Motorengehäuses 3 eines Motors, der eine Motorwelle 4 aufweist, dargestellt. Der Motor kann - wie bei der oben unter Bezugnahme auf Fig. 1 beschriebenen und aus dem Stand der Technik bekannten Lösung - insbesondere ein Elektromotor sein, der zum Beispiel bei einer Pumpvorrichtung, insbesondere bei einer Flügelzellenpumpe, eingesetzt werden kann.

Der Verschlussstopfen 1 dient dazu, die Motorwelle 4 während des Montageprozesses abzustützen und besteht vorzugsweise aus einem gummielastischen Material. Bei der Montage wird der Verschlussstopfen 1 in die Montagebohrung 2 des Motorengehäuses 3 eingepresst. Der Verschlussstopfen 1 ist einstückig ausgebildet und abschnittsweise konisch ausgeführt, so dass er in Umfangsrichtung einen angeschrägten Flächenabschnitt 5 aufweist, der sich nach der Montage in das Innere des Motorengehäuses 3 erstreckt. Ferner weist der Verschlussstopfen 1 eine sich in Umfangsrichtung erstreckende nutartige (insbesondere ringförmig ausgebildete) Vertiefung 6 auf, in die ein Randabschnitt der Montagebohrung 2 während des Einpressvorgangs eingreift, so dass der Verschlussstopfen 1 in der Montagebohrung 2 gegen eine axiale Verschiebung gesichert gehalten werden kann. Derjenige Rand der nutartigen Vertiefung 6, der an den angeschrägten Flächenabschnitt 5 des Verschlussstopfens 1 angrenzt, bildet in diesem Ausführungsbeispiel einen Abdichtungsbereich 60, welcher sich innen über den Rand der Montagebohrung 2 hinweg erstreckt und die Montagebohrung 2 im Inneren des Motorengehäuses 3 abdichten kann.

Im Gegensatz zu der aus dem Stand der Technik bekannten und oben unter Bezugnahme auf Fig. 1 beschriebenen Lösung ist eine zentrale Ausnehmung 7, die im Wesentlichen zylindrisch geformt ist, in der Außenfläche 10 und damit auf der Montageseite des Verschlussstopfens 1 ausgebildet, mithin also im Vergleich zu der aus dem Stand der Technik bekannten Lösung um 180° gedreht.

Die Montage des Verschlussstopfens 1, die in Fig. 3 veranschaulicht ist, erfolgt vorzugsweise mittels einer Montagehilfe 8, die einen Montagezapfen 80 aufweist, welcher in die zentrale Ausnehmung 7 des Verschlussstopfens 1 eingeführt werden kann. Zunächst wird bei der Montage die Innenfläche 11 des Verschlussstopfens 1 derart verformt, dass sich der in Umfangsrichtung erstreckende Abdichtungsabschnitt 60 radial nach innen verformt, so dass dieser Abdichtungsabschnitt 60 nach dem Hindurchtritt durch die Montagebohrung 2 in Position gelangt. Der Durchmesser des Montagezapfens 80 ist vorliegend etwas kleiner als der Durchmesser der zentralen Ausnehmung 7, um eine Verformung des Verschlussstopfens 1 während des Einpressens in radialer Richtung zu ermöglichen. Unterstützt wird der Einpressvorgang des Verschlussstopfens 1 durch eine Dehnung desselben in axialer Richtung, die durch den Druck der Montagehilfe 8 bewirkt wird. Schließlich kommt noch eine Basisfläche 81 der Montagehilfe 8 mit der Außenfläche 11 des Verschlussstopfens 1 in Berührung, um die Dehnung des Verschlussstopfens 1 zu begrenzen und somit die Endlage des Montagevorgangs zu bestimmen. Vorzugsweise ist der Montagezapfen 80 gegenüber der Montagehilfe 8 derart vorgespannt, dass eine hohe axiale Drucklast auf der Motorwelle 4 vermieden werden kann. Dadurch kann eine BeschädigungNerformung der Motorwelle 4 während der Montage verhindert werden. Ein partielles Hängenbleiben des Verschlussstopfens 1 in der Montagebohrung 2 während des Einpressvorgangs, das bei der aus dem Stand der Technik bekannten Lösung zu einer Fehlmontage und gegebenenfalls zu unentdeckten Undichtigkeiten des Motorengehäuses 3 führen kann, kann bei der Durchführung des hier vorgestellten Verfahrens wirksam verhindert werden.

### Bezugszeichenliste

- 1: Verschlussstopfen
- 2: Montagebohrung
- 3: Gehäuse
- 4: Motorwelle
- 5: angeschrägter Flächenabschnitt
- 6: nutartige Vertiefung
- 7: Ausnehmung
- 8: Montagehilfe
- 10: Außenfläche
- 11: Innenfläche
- 60: Abdichtungsabschnitt
- 80: Montagedorn
- 81: Basisfläche

## Patentansprüche

1. Verfahren zur Anbringung eines Verschlussstopfens (1) in einer Montagebohrung (2) eines Motorengehäuses (3), umfassend die Schritte
- Bereitstellen eines Verschlussstopfens (1) mit einer zentralen Ausnehmung (7) an einer Außenfläche (10), die nach der Montage an einer Außenseite des Motorengehäuses (2) anliegt, und einem sich in Umfangsrichtung erstreckenden Abdichtungsabschnitt (60) zur Abdichtung der Montagebohrung (2),
- Einführen eines Montagezapfens (80) einer Montagehilfe (8) in die zentrale Ausnehmung (7) des Verschlussstopfens (1),
- Ansetzen des Verschlussstopfens (1) an einem Rand der Montagebohrung (2),
- Verformen einer Innenfläche des Verschlussstopfens (1) durch Einpressen in die Montagebohrung (2), so dass der Abdichtungsabschnitt (60) nach dem Hindurchtritt durch die Montagebohrung (2) in eine Position gelangt, in der er den Rand der Montagebohrung (2) hintergreift,
**dadurch gekennzeichnet, dass** der Montagezapfen (80) gegenüber dem übrigen Teil der Montagehilfe (8) vorgespannt wird und dass sich der Abdichtungsabschnitt (60) während der Montage radial nach innen verformt.

2. Verfahren nach Anspruch 1, **dadurch gekennzeichnet, dass** der Verschlussstopfen (1) während des Einpressens in die Montageöffnung in axialer Richtung gedehnt wird und die axiale Dehnung durch den Druck der Montagehilfe (8) bewirkt wird.

3. Verfahren nach Anspruch 1 oder 2, **dadurch gekennzeichnet, dass** eine Basisfläche (81) der Montagehilfe (8) mit der Außenfläche (10) des Verschlussstopfens (1) in Kontakt gebracht wird, um die Dehnung des Verschlussstopfens (1) zu begrenzen.

## Claims

1. Procedure for the fastening of a sealing plug (1) in an assembly bore (2) of a motor housing (3), comprising the steps
- Provision of a sealing plug (1) with a central recess (7) on one outer surface (10) resting against an outer surface of the motor housing (2) after assembly, and a sealing area (60) extending in the circumferal direction for the sealing of the assembly bore (2),
- Insertion of an assembly pin (80) of an assembly aid (8) in the central recess (7) of the sealing plug (1),
- Placing of the sealing plug (1) on an edge of the assembly bore (2),
- Deformation of an inner surface of the sealing plug (1) by pressing it into the assembly bore (2), so that once the sealing area (60) has passed through the assembly bore (2) it reaches a position where it engages behind the edge of the assembly bore (2),
**characterized in that** the assembly pin (80) is preloaded relative to the remaining part of the assembly aid (8) and **in that** the sealing area (60) is deformed radially during assembly.

2. Procedure according to Claim 1, **characterized in that** the sealing plug (1) is stretched in the axial direction during the process of pressing into the assembly opening and that the axial stretch is achieved by the pressure excerted by the assembly aid (8).

3. Procedure according to Claim 1 or 2, **characterized in that** a basic surface (81) of the assembly aid (8) is brought into contact with the outer surface (10) of the sealing plug (1) to limit the stretching of the sealing plug (1).

## Revendications

1. Procédé de montage d'un bouchon de fermeture (1) dans un alésage de montage (2) d'un carter de moteur (3), comprenant les étapes suivantes :
- mettre à disposition un bouchon de fermeture (1) avec un évidement central (7) sur une surface extérieure (10) qui s'étend après le montage sur un côté extérieur du carter de moteur (2)¹ et une section d'étanchéité (60) qui s'étend dans une direction circonférentielle pour étancher l'alésage de montage (2),
- insérer un tenon de montage (80) d'un dispositif d'aide au montage (8) dans l'évidement central (7) du bouchon de fermeture (1),
- positionner le bouchon de fermeture (1) sur un bord de l'alésage de montage (2),
- déformer une surface intérieure du bouchon de fermeture (1) par emmanchement dans l'alésage de montage (2) de manière à ce que la section d'étanchéité (60) après le passage par l'alésage de montage (2) atteigne une position dans laquelle elle vient en prise derrière du bord de l'alésage de montage (2),
**caractérisé en ce que**
le tenon de montage (80) est précontraint par rapport à la partie restante du dispositif d'aide au montage (8) et que la section d'étanchéité (60) se déforme radialement vers l'intérieur lors du montage.

2. Procédé selon la revendication 1, **caractérisé en ce que** le bouchon de fermeture (1) est allongé dans le sens axial lors de l'emmanchement dans l'ouverture de montage et l'allongement axial se produit par la pression du dispositif d'aide au montage (8).

3. Procédé selon la revendication 1 ou 2, **caractérisé en ce qu'**une surface de base (81) du dispositif d'aide au montage (8) est mise en contact avec la surface extérieure (10) du bouchon de fermeture (1) pour limiter l'allongement du bouchon de fermeture (1).
